# EUROPEAN PATENT SPECIFICATION

(11) **EP 3 796 431 B1**
(45) Date of publication and mention of the grant of the patent: **16.08.2023**
(21) Application number: 20162317.0
(22) Date of filing: 11.03.2020
(51) Int. Cl.: H01M 4/134, H01M 4/38, H01M 4/62, H01M 4/1395, H01M 4/04, H01M 10/0525, H01M 4/02

(54) **SILICON NEGATIVE ELECTRODE SHEET, MANUFACTURING METHOD THEREOF AND LITHIUM ION BATTERY**
NEGATIVELEKTRODENFOLIE AUS SILICIUM, HERSTELLUNGSVERFAHREN DAFÜR UND LITHIUM-IONEN-BATTERIE
FEUILLE D'ÉLECTRODE NÉGATIVE DE SILICIUM, SON PROCÉDÉ DE FABRICATION ET BATTERIE LITHIUM-ION

(30) Priority: 23.09.2019 CN 201910898475
(43) Date of publication of application: 24.03.2021
(73) Proprietor: Beijing Xiaomi Mobile Software Co., Ltd., Beijing 100085 (CN)
(72) Inventor: DU, Sihong, Beijing, Beijing 100085 (CN); WANG, Zongqiang, Beijing, Beijing 100085 (CN)
(74) Representative: dompatent von Kreisler Selting Werner - Partnerschaft von Patent- und Rechtsanwälten mbB

(56) References cited:
- WO-A1-2013/159471
- CN-A- 101 847 708
- CN-A- 108 550 857

## Description

### TECHNICAL FIELD

The present invention relates to the technical field of batteries, and more particularly, to a silicon negative electrode sheet and a manufacturing method thereof, and a lithium ion battery.

### BACKGROUND

With the rapid development of industries of electric vehicles and consumer goods, the demand for long battery life is more and more urgent. The battery life is closely related to the energy density of batteries. Silicon negative electrode lithium ion batteries, which have significant advantages in energy density improvement, are widely used. However, at present, the charging capacity of silicon negative electrode lithium ion batteries needs to be further improved.

WO2013/159471A1 discloses a porous thin film silicon-based negative electrode material of a high-performance lithium ion cell and a preparation method thereof. It adopts a three-dimensional porous current collector material, such as a copper foil mesh, etc.

CN 101847708A discloses lithium ion secondary battery negative pole and preparation method thereof, wherein at least two silicon thin films with gross thickness no more than 20 µ m are deposited at least one of two surfaces of the negative current collector.

CN108550857A discloses a negative electrode sheet having a gradient silicon content, wherein the intermediate layer is made of a high silicon content active material and the outer layer is made of a low silicon content active material, to form a "sandwich" structure.

### SUMMARY

In order to overcome the problems in relevant arts, the present invention provides a silicon negative electrode sheet and a manufacturing method thereof, and a lithium ion battery.

According to one aspect of embodiments of the present invention, there is provided a silicon negative electrode sheet, comprising: a current collector; and at least two active coating layers, the active coating layers containing negative active materials and being sequentially coated on the current collector, the negative active materials containing silicon materials; wherein through holes are formed in each of the active coating layers, the through holes extending vertically through the respective active coating layer and wherein the through holes are arranged at intervals in the active coating layers, and among the at least two active coating layers, a silicon content of an active coating layer proximal to the current collector is higher than a silicon content of an active coating layer distal from the current collector.

In one embodiment, the through holes of adjacent active coating layers are arranged in a staggered form.

In one embodiment, a difference of the silicon content between two adjacent active coating layers is in a range from 5wt% to 35wt%.

In one embodiment, the negative active materials contain graphite materials; and a maximum thickness of the active coating layer is determined according to granularity index of the graphite materials contained in the at least two active coating layers.

In one embodiment, the at least two active coating layers are made from active slurry containing a conductive agent, a bonding agent, a thickener and the negative active materials; and a mass content of the bonding agent contained in an active coating layer with high silicon content in the active slurry is higher than a mass content of an bonding agent contained in an active coating layer with low silicon content in the active slurry.

In one embodiment, a difference of the mass content of the bonding agent between two adjacent active coating layers is no more than 3wt%.

In one embodiment, the number of the active coating layers is less than or equal to 5.

In one embodiment, the number of active coating layers is equal to 5; a mass content of silicon in the negative active materials in a first active coating layer is 20%-50%; a mass content of silicon in the negative active materials in a second active coating layer is 15%-40%; a mass content of silicon in the negative active materials in a third active coating layer is 10%-30%; a mass content of silicon in the negative active materials in a fourth active coating layer is 5%-20%; and a mass content of silicon in the negative active materials in a fifth active coating layer is less than 5%, based on the total mass of the respective negative active materials.

In one embodiment, a thickness of each of the at least two active coating layers is 20-90 µm.

According to another aspect of embodiments of the present invention, there is provided a method of manufacturing a silicon negative electrode sheet, comprising: sequentially coating at least two active coating layers containing negative active materials on a current collector, the negative active materials containing silicon materials; and forming through holes in each of the at least two active coating layers, the through holes extending vertically through the respective active coating layer and being arranged at intervals in the active coating layers, thereby obtaining the negative electrode sheet for a lithium ion battery; wherein, among the at least two active coating layers, a silicon content of an active coating layer proximal to the current collector is higher than a silicon content of an active coating material distal from the current collector.

In one embodiment, the through holes of adjacent active coating layers are arranged in a staggered form.

In one embodiment, the silicon negative electrode sheet comprises N active coating layers, where 2 ≤ N ≤ 5; the method comprises:
a step of coating a first active coating layer of the N active coating layers on a surface of the current collector and then forming first through holes in the first active coating layer coated on the surface of the current collector, the first through holes extending vertically through the first active coating layer;
a step of coating a second active coating layer of the N active coating layers on the first active coating layer formed with the first through holes and then forming second through holes in the second active coating layer coated on the first active coating layer formed with the first through holes, the second through holes extending vertically through the second active coating layer; and
repeating the above steps till the silicon negative electrode sheet comprising N active coating layer is obtained.

In one embodiment, the at least two active coating layers are made from active slurry containing a conductive agent, a bonding agent, a thickener and the negative active materials; and the method further comprises: preparing the active slurry containing the negative active materials including the silicon materials; and coating and compacting the active slurry on a surface of the current collector, thereby forming the at least two active coating layers.

According to still another aspect of embodiments of the present invention, there is provided a lithium ion battery, comprising any foregoing silicon negative electrode sheet.

The technical solutions of the embodiments of the present invention have the following advantages: by forming through holes arranged at intervals in the at least two active coating layers of the silicon negative electrode sheet, the porosity of the silicon negative electrode sheet is improved, thereby facilitating the storage of electrolyte and improving the liquid holding capacity of the silicon negative electrode. In the charging and discharging process, the transmission distance of ions is reduced, and there are gaps between silicon material particles of the silicon negative electrode sheet, which provides a buffer space for the cyclic expansion inside the silicon particles, thereby improving the charging capacity of the silicon negative electrode.

It should be understood that the above general description and the following detailed description are exemplary and explanatory and should not limit the present invention.

### BRIEF DESCRIPTION OF THE DRAWINGS

The accompanying drawings, which are incorporated in and constitute a part of this specification, illustrate embodiments consistent with the present invention and, together with the specification, serve to explain the principles of the present invention.
FIG. 1 is a structural view illustrating a silicon negative electrode sheet according to an exemplary embodiment of the present invention;
FIG. 2 is a structural view illustrating a silicon negative electrode sheet according to an exemplary embodiment of the present invention;
FIG. 3 is a plan view illustrating through holes formed in active coating layers of the silicon negative electrode sheet according to an exemplary embodiment of the present invention;
FIG. 4 is a schematic diagram illustrating a method for manufacturing a silicon negative electrode sheet according to an exemplary embodiment of the present invention; and
FIG. 5 is a schematic diagram illustrating a method for manufacturing active coating layers of the silicon negative electrode sheet according to an exemplary embodiment of the present invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

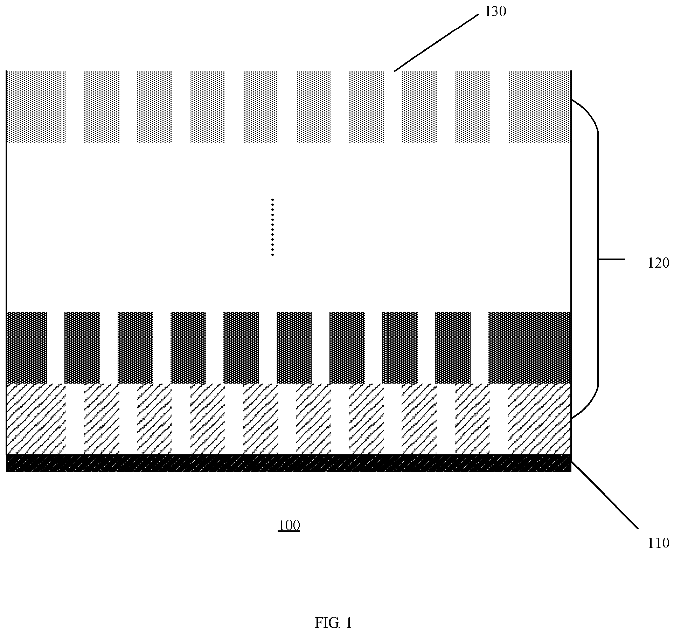

FIG. 1 is a structural view illustrating a silicon negative electrode sheet according to an exemplary embodiment of the present invention. Referring to FIG. 1, the silicon negative electrode sheet 100 includes: a current collector 110 and active coating layers 120. In FIG. 1, the silicon negative electrode sheet 100 includes n layers of active coating 120, in which n ≥ 2. In other words, the number of the active coating layers 120 in the present invention is at least two. In the present invention, the active coating layer 120 contains negative active materials. Through holes 130 are formed in the active coating layer 120 and extend vertically through the active coating layer 120. Herein, "vertically" indicates a direction along the thickness of each of the active coating layers, that is, a direction vertical to the active coating layer. A plurality of through holes 130 may be provided in each active coating layer 120 and may be arranged at intervals.

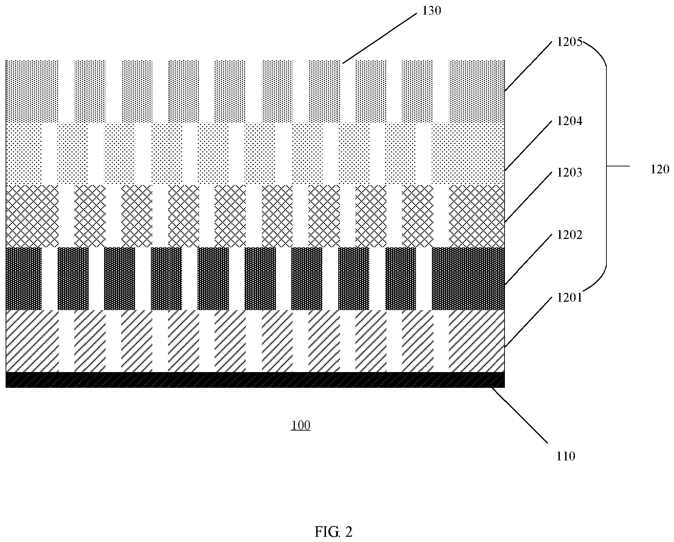

In one embodiment of the present invention, the number of active coating layers 120 is less than or equal to 5 to avoid too thick silicon negative electrode sheet from affecting a positive electrode sheet. According to one embodiment of the present invention five layers of the active coating 120 are provided. FIG. 2 is a structural view illustrating a silicon negative electrode sheet according to an exemplary embodiment of the present invention. Referring to FIG. 2, the active coating layers 120 include an active coating layer 1201, an active coating layer 1202, an active coating layer 1203, an active coating layer 1204 and an active coating layer 1205.

It is to be understood that the number of layers of the active coating 120 in the present invention may be set according to actual demands on the premise of not affecting the positive electrode sheet, and the number of layers of the active coating 120 is not limited in the present invention.

The current collector 110 may be copper foil, for example, electrolytic copper foil with a thickness of 7-15 µm. The active coating layer 1201, the active coating layer 1202, the active coating layer 1203, the active coating layer 1204 and the active coating layer 1205 of the active coating layers 120 are sequentially coated on the current collector 110. The active coating layer 1201 is coated on a surface of the current collector 110, and the active coating layer 1202 is coated on the active coating layer 1201. The active coating layer 1203, the active coating layer 1204 and the active coating layer 1205 are formed in a similar manner to that of the above active coating layer 1202, so no further description will be given herein.

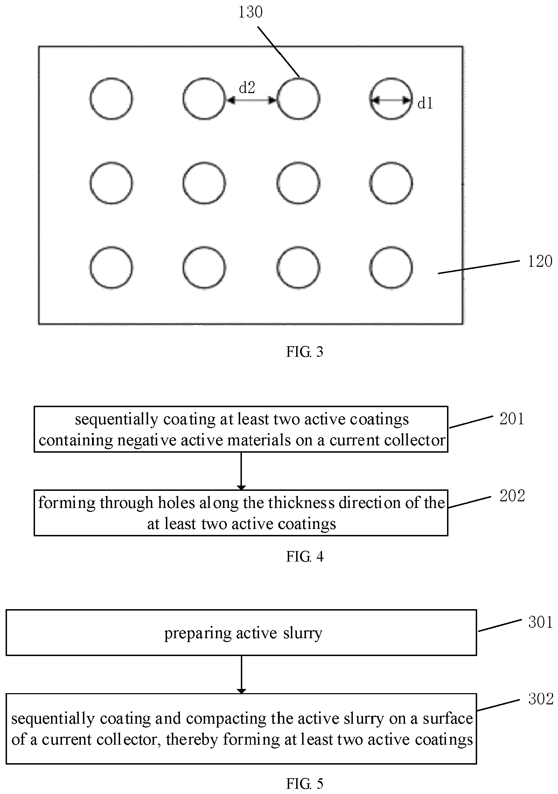

FIG. 3 is a plan view illustrating through holes formed in the active coating layers of the silicon negative electrode sheet according to the exemplary embodiment of the present invention. Referring to FIG.3, through holes 130 are formed in each of the active coating layers 120 and extend vertically through the respective active coating layer 120. That is, the depth of the through hole 130 is equal to the thickness of the active coating layer 120.

The through holes 130 may be multiple and are arranged at intervals. For instance, the plurality of through holes 130 may be regularly arranged, for example, in a matrix or multiple concentric circles form, or be irregularly arranged. The shape of the through hole 130 in a cross-section in a direction perpendicular to the thickness of the active coating layer may be circular, square, rectangular, or other polygons, or may also be irregular shape. The cross-sectional shape of the through hole 130 in the direction perpendicular to the thickness of the active coating layer is not limited in the present invention.

For instance, in the cross section perpendicular to the thickness of the active coating layer, the shape of the through hole 130 is circular, wherein the aperture d1 may be 2-15 µm, and the pitch d2 may be 50-100 µm. It is to be understood that the aperture d1 and the pitch d2 of the through hole 130 are not limited in the present invention.

In the embodiment of the present invention, due to the through holes arranged at intervals in the at least two active coating layers of the silicon negative electrode sheet, the porosity of the silicon negative electrode sheet is improved, which facilitates the storage of electrolyte, effectively improves the liquid holding capacity of the silicon negative electrode sheet, reduces the ion transmission distance during charging and discharging, forms gaps between silicon material particles of the silicon negative electrode sheet, provides a buffer space for the cyclic expansion inside the silicon particles, and improves the charging capacity of the silicon negative electrode.

Referring to FIGS. 2 and 3, the through holes 130 in adjacent active coating layers 120 are arranged in a staggered form. The through holes of the active coating layer 1201 and the through holes of the active coating layer 1202 are arranged in a staggered form. That is, the plurality of through holes 130 of the active coating layer 1201 do not overlap the plurality of through holes 130 of the active coating layer 1202 in a horizontal plan view.

For instance, the staggered distance d between each through hole 130 in the active coating layer 1201 and each through hole 130 of the active coating layer 1202 is 4-20 µm.

The staggered arrangement of through holes 130 in adjacent active coating layers 120 facilitates the storage and transmission of electrolyte in the through holes 130, reduces the operation of forming holes in the plurality of active coating layers 120, and prevents the upper active coating layer 120 from affecting the through holes 130 on the lower active coating layer 120.

In one embodiment of the present invention, the negative active materials contain silicon materials. Herein, the silicon material may be one of silicon alloy, silicon-carbon composite materials and silicon oxide or any combination thereof. In the active coating layers 120, the silicon content of active coatings proximal to the current collector 110 is higher than the silicon content of active coating layers 120 distal from the current collector 110. In other words, when the number of layers of the active coating 120 is N, N is greater than or equal to 2, the silicon content in the (N-1)th active coating layer 120 is higher than the silicon content in the Nth active coating layer 120.

In the present invention, among the active coating layers 120, as the silicon content of the active coating layer 120 proximal to the current collector 110 is higher than the silicon content of the active coating layer 120 distal from the current collector 110, on the premise that the silicon content in the negative active materials is constant, silicon is gathered in high content in the active coating layer 120 near the current collector 110. A difference of the silicon content between two adjacent active coating layers may be in a range from 5 wt% to 35 wt%. Thus, the current density distribution on one side proximal to the current collector 110 is more uniform, and the negative active materials may be charged and discharged uniformly to ensure the uniform distribution of the internal expansion force of the silicon negative electrode sheet 100.

In one embodiment of the present invention, in order to reduce the probability that the active coating layer is detached from the current collector due to the fracture between and within the silicon particles affected by the volume expansion effect, the mass content of silicon in the active coating layers is controlled within a certain range. For instance, the mass content of silicon in the negative active materials of the first active coating layer is controlled within a range of 20%-50%; the mass content of silicon in the negative active materials of the second active coating layer is controlled within a range of 15%-40%; the mass content of silicon in the negative active materials of the third active coating layer is controlled within a range of 10%-30%; the mass content of silicon in the negative active materials of the fourth active coating layer is controlled within a range of 5%-20%; and the mass content of silicon in the negative active materials of the fifth active coating layer is controlled within a range of 0-5%, based on the total mass of the respective active materials.

In one embodiment of the present invention, the negative active materials also contain graphite materials. The graphite materials may be natural graphite or electrographite. As graphite has the advantages of high electronic conductivity, large lithium ion diffusion coefficient, small volume change of the laminated structure before and after lithium intercalation, high lithium intercalation capacity, and low lithium intercalation potential, the conductivity of the current collector can be improved. As the graphite materials with the silicon materials is taken as the negative active materials, the graphite mesh structure has the function of fixing the silicon particles, thereby reducing the volume expansion of the silicon materials, and improving the conductivity of the silicon negative electrode sheet.

In such embodiment, high power type graphite materials or energy compatible power type graphite materials may be selected as the graphite materials contained in the negative active materials. The high power type graphite materials may be those normally having a particle diameter of D50 ≤ 10 µm or D99 ≤ 45 µm, such as QCD series of graphite materials made by Shanshan technology Ltd.. The energy compatible power type graphite materials may be those normally having particle diameter of D50 ≤20 µm or D99 ≤ 45 µm, such as LKP series of graphite materials made by Shanshan technology Ltd.. The type of the graphite contained in different active coating layers 120 in the at least two active coating layers 120 may be same or different. Herein, the granularity index of different types of the graphite materials is different, and the compacting density of the silicon negative electrode sheet 100 is also different. Generally, the granularity index, such as D10, D50, D90, D99, etc. can be measured by Laser Particle Size Analyzer, the granularity index being a common criterion for characterizing particles sizes for powder material. Compacting density can be measured by Powder Automatic Compaction Density Instrument according to the calculation formula: compacting density = surface density/ thickness of material.

For instance, as for the active coating layers 120 of the silicon negative electrode sheet 100 as shown in FIG. 2, high power type graphite may be selected as the active coating layer 1201 and the active coating layer 1202. The granularity index of the graphite materials is D10 ≤ 5 µm, D50 ≤ 10 µm, D90 ≤ 25 µm, and the compacting density of the silicon negative electrode sheet 100 is controlled within a range of 1.65-1.70 g/cm³. Energy compatible power type graphite may be selected as the active coating layer 1203. The granularity index of the graphite materials is D10 ≤ 10 µm, D50 ≤ 20 µm, D90 ≤30 µm, and the compacting density of the silicon negative electrode sheet 100 is controlled within a range of 1.68-1.75 g/cm³.

The maximum thickness of the active coating layer 120 is determined according to the granularity index of the graphite materials contained in the active coating. Particle diameter may be used as the granularity index of the graphite materials. For instance, the particle diameter of the graphite materials in the present invention may be particle size D99, which may be measured by Laser Particle Size Analyzer. Herein, D represents the diameter of the graphite particles, and D99 indicates that 99% particle diameter is below a certain value. In one example of the present invention, the granularity index of the graphite materials is determined by the particle diameter D99, and the thickness of the active coating layer is 20-90 µm for D99 ≤ 45 µm.

In one embodiment of the present invention, the active coating layer 120 is made from active slurry. The active slurry includes solute and solvent that are compatible with each other, and both of them are uniformly mixed to form the active slurry. The solute in the active slurry is prepared by mixing a conductive agent, a bonding agent, a thickener and negative active materials. The conductive agent is used for improving the conductivity of the negative active materials. The bonding agent is an inactive substance and used for bonding the active coating layer and the current collector and fixing the active coating layer on a surface of the current collector. The thickener is used for improving the consistency of the active slurry and maintaining the stability of the active slurry. The solvent may be one or more of N, N-dimethylformamide (DMF), N, N-dimethylacetamide (DMAc), N-2-methylpyrrolidone (NMP), acetone, tetrahydrofuran (THF), and methanol.

Herein, in the active coating layer with high silicon content among the active coating layers 120, the mass content of the bonding agent in the active slurry is high. The conductive agent may be one or more of carbon nanotube, graphite, vapor-grown carbon fiber (VGCF) and the like or any combination thereof. The bonding agent may be one or more of sodium polyacrylate and its improvements, styrene-butadiene rubber, nitrile rubber, butadiene rubber, and modified styrene-butadiene rubber or any combination thereof. The thickener adopts the conventional sodium carboxymethyl cellulose (CMC-Na). Herein, "improvements" means related materials produced by modifying functional groups of the polyacrylate (PAA).

In one embodiment of the present invention, the mass content of the bonding agent in the active slurry of the active coating layer with high silicon content is higher than the mass content of the bonding agent in the active slurry of the active coating layer with low silicon content. A difference of the mass content of the bonding agent between two adjacent active coating layers may be no more than 3 wt%. In the active coating layer with high silicon content, in order to further inhibit the expansion among silicon material particles, the content of the bonding agent is correspondingly increased, so as to further improve the stability of the silicon negative electrode sheet and improve the conductivity of the silicon negative electrode sheet.

For instance, when the number of layers of the at least two active coating layers is five, silicon and graphite are mixed as the negative active materials, and the mass ratio of solid ingredients of the negative active materials, the conductive agent, the bonding agent and the thickener in the active coatings may be as follows:

In the first active coating layer, the mass ratio of the negative active materials, the conductive agent, the bonding agent and the thickener is 92.5%-96.7% : 0.8%-2% : 2%-4% : 0.5%-1.5%.

In the second active coating layer, the mass ratio of the negative active materials, the conductive agent, the bonding agent and the thickener is 92.5%-95.7% : 2%-3% : 1.5%-3% : 0.8%-1.5%.

In the third active coating layer, the mass ratio of the negative active materials, the conductive agent, the bonding agent and the thickener is 93%-96% : 2%-3% : 1%-2.5% : 1%-1.5%.

In the fourth active coating layer, the mass ratio of the negative active materials, the conductive agent, the bonding agent and the thickener is 93.5%-95.8% : 2%-3% : 1%-2% : 1.2%-1.5%.

In the fifth active coating layer, the mass ratio of the negative active materials, the conductive agent, the bonding agent and the thickener is 94-96 % : 2%-3% : 1%-1.5% : 1%-1.5%.

FIG. 4 is a schematic diagram illustrating a method for manufacturing a silicon negative electrode sheet according to an exemplary embodiment of the present invention. Referring to FIG. 4, the method for manufacturing the silicon negative electrode sheet includes:

Operation S201: sequentially coating at least two active coating layers containing negative active materials on a current collector; and

Operation S202: forming through holes in each of the active coating layers, the through holes extending vertically through the respective active coating layer, in which the through holes are arranged at intervals, so that the negative electrode sheet is obtained.

A layer of active coating containing negative active materials is coated on a surface of the current collector by electrode sheet coating technology and is then compacted to form the first active coating layer. The first active coating layer provided with through holes is obtained by forming the through holes in the first active coating layer which extend vertically through the first active coating layer by mechanical means or laser.

A layer of active coating containing negative active materials is continuously coated on a surface of the first active coating layer and is then compacted to form the second active coating layer. The second active coating layer provided with through holes is obtained by forming the through holes in the second active coating layer which extend vertically through the second active coating layer by mechanical means or laser.

The above operation is adopted until the required layers of active coatings are obtained.

In one embodiment of the present invention, the layer number N of the active coating layers is less than or equal to 5, and N should not be too large. As the number of layers of the active coatings is larger, the thickness of the negative electrode sheet is increased, thereby affecting the chemical performance of the positive electrode sheet.

In one embodiment of the present invention, the through holes of adjacent active coating layers are arranged in a staggered form.

In one embodiment of the present invention, the adjacent active coating layers with through holes arranged in a staggered form may be prepared by the following steps: coating a layer of active coating containing negative active materials on the surface of the current collector by electrode sheet coating technology, and compacting the active coating so as to form the first active coating layer; and forming first through holes in the first active coating layer which extend vertically through the first active coating layer by mechanical means or laser so as to form the first active coating layer provided with the first through holes.

A layer of active coating containing negative active materials is continuously coated on a surface of the first active coating layer and is then compacted to form the second active coating layer. Second through holes are formed in the second active coating layer, which extend vertically through the second active coating layer by mechanical means or laser, and the through holes of the second active coating layer and the first active coating layer are arranged in a staggered form by setting aperture distribution spacing of the second through holes in the second active coating layer different from that of the first through holes in the first active coating layer. For example, the misaligned distance d between the plurality of through holes of the first active coating layer and the plurality of through holes of the second active coating layer is 4-20 µm. In this way, the second active coating layer provided with the through holes is obtained.

The negative active materials contain silicon materials, and among the active coatings layer, the silicon content of the active coating layer proximal to the current collector is higher than the silicon content of the active coating layer distal from the current collector. On the premise that the silicon content in the negative active materials is constant, silicon is gathered in high content in the active coating layer near the current collector. Thus, the current density distribution on one side proximal to the current collector is more uniform, and the negative active materials may be charged and discharged uniformly to ensure the uniform distribution of the internal expansion force of the silicon negative electrode sheet.

In one embodiment of the present invention, the active coating layer is made from active slurry which contains a conductive agent, a bonding agent, a thickener and negative active materials.

The negative active materials contain silicon materials and also contain graphite materials. The active slurry is prepared by uniformly mixing the conductive agent, the bonding agent, the thickener and the negative active materials.

FIG. 5 is a schematic diagram illustrating a method for preparing active coating layers of the silicon negative electrode sheet according to the exemplary embodiment of the present invention. Referring to FIG. 5, the method for preparing the active coating layers includes:

Operation S301: preparing active slurry.

The active slurry contains negative active materials, a conductive agent, a bonding agent and a thickener. The negative active materials contain silicon materials. The negative active materials, the thickener, the bonding agent and the conductive agent are mixed to form solid ingredient solute for the active slurry according to the mass ratio of solid ingredients of the negative active materials, the conductive agent, the bonding agent and the thickener in the active coatings mentioned in the embodiment of the present invention, and the obtained solid ingredient solute is dispersed and stirred in an organic solvent to prepare the active slurry.

Operation S302: sequentially coating and compacting the active slurry on a surface of a current collector, thereby forming at least two active coating layers.

The active slurry is coated on the surface of the current collector and then dried and rolled to obtain the active coating layer. It is to be understood that when multiple layers of the active coating are provided, the active slurry may be sequentially coated and compacted on the surface of the current collector.

In one embodiment of the present invention, there is provided a lithium ion battery, comprising the foregoing silicon negative electrode sheet 100.

## Claims

1. A silicon negative electrode sheet (100), comprising:
a current collector (110); and
at least two active coating layers (120) containing negative active materials, sequentially coated on the current collector (110), the negative active materials containing silicon materials;
being **characterized in that** through holes (130) are formed in each of the active coating layers (120), the through holes (130) extending vertically through the respective active coating layer (120) and wherein the through holes (130) are arranged at intervals in the active coating layers (120); and
among the at least two active coating layers (120), a silicon content of an active coating layer proximal to the current collector (110) is higher than a silicon content of an active coating layer distal from the current collector (110).

2. The silicon negative electrode sheet (100) of claim 1, being **characterized in that** the through holes of adjacent active coating layers (120) are arranged in a staggered form.

3. The silicon negative electrode sheet (100) of claim 1 or 2, being **characterized in that** a difference of the silicon content between two adjacent active coating layers is in a range from 5 wt% to 35 wt%.

4. The silicon negative electrode sheet (100) of any of claims 1 to 3, being **characterized in that** the negative active materials contain graphite materials.

5. The silicon negative electrode sheet (100) of any of claims 1 to 4, being **characterized in that** the at least two active coating layers (120) are made from active slurry containing a conductive agent, a bonding agent, a thickener and the negative active materials; and
a mass content of the bonding agent contained in an active coating layer with high silicon content in the active slurry is higher than a mass content of the bonding agent contained in an active coating layer with low silicon content in the active slurry.

6. The silicon negative electrode sheet (100) of claim 5, being **characterized in that** a difference of the mass content of the bonding agent between two adjacent active coating layers is no more than 3 wt%.

7. The silicon negative electrode sheet (100) of any of claims 1 to 6, being **characterized in that** number of layers of the at least two active coating layers (120) is less than or equal to 5.

8. The silicon negative electrode sheet (100) of claim 7, being **characterized in that** the number of layers of the at least two active coating layers (120) is equal to 5;
a mass content of silicon in the negative active materials in a first active coating layer (1201) is 20%-50%;
a mass content of silicon in the negative active materials in a second active coating layer (1202) is 15%-40%;
a mass content of silicon in the negative active materials in a third active coating layer (1203) is 10%-30%;
a mass content of silicon in the negative active materials in a fourth active coating layer (1204) is 5%-20%; and
a mass content of silicon in the negative active materials in a fifth active coating layer (1205) is less than 5%, based on the total mass of the negative active materials, respectively.

9. The silicon negative electrode sheet (100) of claim 4, being **characterized in that** a thickness of each of the at least two active coating layers (120) is 20-90 µm.

10. A method of manufacturing a silicon negative electrode sheet (100) according to any of claims 1 to 9, comprising:
sequentially coating at least two active coating layers (120) containing negative active materials on a current collector (110), the negative active materials containing silicon materials; and
being **characterized in that** the method further comprises:
forming through holes (130) in each of the active coating layers (120), the through holes (130) extending vertically through the respective active coating layer (120) and being arranged at intervals, thereby obtaining the silicon negative electrode sheet; wherein, among the at least two active coating layers (120), a silicon content of an active coating layer proximal to the current collector (110) is higher than a silicon content of an active coating material distal from the current collector (110).

11. The method of claim 10, being **characterized in that** the through holes (130) of adjacent active coating layers (120) are arranged in a staggered form.

12. The method of any of claims 10 or 11, being **characterized in that** the silicon negative electrode sheet (100) comprises N active coating layers (120), where 2≤N ≤5; the method comprises:
a step of coating a first active coating layer (1201) of the N active coating layers (120) on a surface of the current collector (110) and then forming first through holes (130) in the first active coating layer (1201) coated on the surface of the current collector (110), the first through holes (130) extending vertically through the first active coating layer (1201);
a step of coating a second active coating layer (1202) of the N active coating layers (120) on the first active coating layer (121) formed with the first through holes (130) and then forming second through holes (130) in the second active coating layer (1202) coated on the first active coating layer (121) formed with the first through holes (130), the second through holes (130) extending vertically through the second active coating layer (1202); and
repeating the above steps till the silicon negative electrode sheet comprising N active coating layer (120) is obtained.

13. The method of any of claims 10 to 12, being **characterized in that** the at least two active coating layers (120) are made from active slurry containing a conductive agent, a bonding agent, a thickener, and the negative active materials; and the method further comprises:
a step (301) of preparing the active slurry containing the negative active materials including the silicon materials; and
a step (302) of coating and compacting the active slurry on a surface of the current collector (110), thereby forming the at least two active coating layers (120).

14. A lithium ion battery, comprising a silicon negative electrode sheet (100), being **characterized in that**
the silicon negative electrode sheet (100) is the silicon negative electrode sheet (100) of any one of claims 1 to 9.

## Patentansprüche

1. Negative Silicium-Elektrodenplatte (100), umfassend:
einen Stromabnehmer (110); und
wenigstens zwei aktive Beschichtungsschichten (120), die negative aktive Materialien enthalten, die nacheinander auf den Stromabnehmer (110) aufgetragen sind, wobei die negativen aktiven Materialien Siliciummaterialien enthalten;
**dadurch gekennzeichnet, dass** Durchgangslöcher (130) in jeder der aktiven Beschichtungsschichten (120) gebildet werden, wobei sich die Durchgangslöcher (130) senkrecht durch die jeweilige aktive Beschichtungsschicht (120) hindurch erstrecken und wobei die Durchgangslöcher (130) in regelmäßigen Abständen in den aktiven Beschichtungsschichten (120) angeordnet sind; und
unter den wenigstens zwei aktiven Beschichtungsschichten (120) der Siliciumgehalt einer aktiven Beschichtungsschicht, die proximal zum Stromabnehmer (110) liegt, höher ist als der Siliciumgehalt einer aktiven Beschichtungsschicht, die distal zum Stromabnehmer (110) liegt.

2. Negative Silicium-Elektrodenplatte (100) gemäß Anspruch 1, **dadurch gekennzeichnet, dass** die Durchgangslöcher von benachbarten aktiven Beschichtungsschichten (120) in einer gestaffelten Form angeordnet sind.

3. Negative Silicium-Elektrodenplatte (100) gemäß Anspruch 1 oder 2, **dadurch gekennzeichnet, dass** die Differenz des Siliciumgehalts zwischen zwei benachbarten aktiven Beschichtungsschichten in einem Bereich von 5 Gew.-% bis 35 Gew.-% liegt.

4. Negative Silicium-Elektrodenplatte (100) gemäß einem der Ansprüche 1 bis 3, **dadurch gekennzeichnet, dass** die negativen aktiven Materialien Graphitmaterialien enthalten.

5. Negative Silicium-Elektrodenplatte (100) gemäß einem der Ansprüche 1 bis 4, **dadurch gekennzeichnet, dass** die wenigstens zwei aktiven Beschichtungsschichten (120) aus aktiver Aufschlämmung bestehen, die ein leitendes Mittel, einen Klebstoff, ein Verdickungsmittel und die negativen aktiven Materialien enthält; und
der Massegehalt des Klebstoffs, der in einer aktiven Beschichtungsschicht mit hohem Siliciumgehalt in der aktiven Aufschlämmung enthalten ist, höher ist als der Massegehalt des Klebstoffs, der in einer aktiven Beschichtungsschicht mit niedrigem Siliciumgehalt in der aktiven Aufschlämmung enthalten ist.

6. Negative Silicium-Elektrodenplatte (100) gemäß Anspruch 5, **dadurch gekennzeichnet, dass** die Differenz des Massegehalts des Klebstoffs zwischen zwei benachbarten aktiven Beschichtungsschichten nicht größer als 3 Gew.-% ist.

7. Negative Silicium-Elektrodenplatte (100) gemäß einem der Ansprüche 1 bis 6, **dadurch gekennzeichnet, dass** die Anzahl der Schichten der wenigstens zwei aktiven Beschichtungsschichten (120) kleiner oder gleich 5 ist.

8. Negative Silicium-Elektrodenplatte (100) gemäß Anspruch 7, **dadurch gekennzeichnet, dass** die Anzahl der Schichten der wenigstens zwei aktiven Beschichtungsschichten (120) gleich 5 ist;
der Massegehalt an Silicium in den negativen aktiven Materialien in einer ersten aktiven Beschichtungsschicht (1201) 20%-50% beträgt;
der Massegehalt an Silicium in den negativen aktiven Materialien in einer zweiten aktiven Beschichtungsschicht (1202) 15%-40% beträgt;
der Massegehalt an Silicium in den negativen aktiven Materialien in einer dritten aktiven Beschichtungsschicht (1203) 10%-30% beträgt;
der Massegehalt an Silicium in den negativen aktiven Materialien in einer vierten aktiven Beschichtungsschicht (1204) 5%-20% beträgt; und
der Massegehalt an Silicium in den negativen aktiven Materialien in einer fünften aktiven Beschichtungsschicht (1205) kleiner als 5% ist, jeweils bezogen auf die Gesamtmasse der negativen aktiven Materialien.

9. Negative Silicium-Elektrodenplatte (100) gemäß Anspruch 4, **dadurch gekennzeichnet, dass** die Dicke jedes der wenigstens zwei aktiven Beschichtungsschichten (120) 20-90 µm beträgt.

10. Verfahren zur Herstellung einer negativen Silicium-Elektrodenplatte (100) gemäß einem der Ansprüche 1 bis 9, umfassend:
das sukzessive Beschichten von wenigstens zwei aktiven Beschichtungsschichten (120), die negative aktive Materialien auf einem Stromabnehmer (110) enthalten, wobei die negativen aktiven Materialien Siliciummaterialien enthalten; und
**dadurch gekennzeichnet, dass** das Verfahren weiterhin umfasst:
Bilden von Durchgangslöchern (130) in jeder der aktiven Beschichtungsschichten (120), wobei sich die Durchgangslöcher (130) senkrecht durch die jeweilige aktive Beschichtungsschicht (120) hindurch erstrecken und in regelmäßigen Abständen angeordnet sind, wodurch man die negative Silicium-Elektrodenplatte erhält; wobei unter den wenigstens zwei aktiven Beschichtungsschichten (120) der Siliciumgehalt einer aktiven Beschichtungsschicht, die proximal zum Stromabnehmer (110) liegt, höher ist als der Siliciumgehalt einer aktiven Beschichtungsschicht, die distal zum Stromabnehmer (110) liegt.

11. Verfahren gemäß Anspruch 10, **dadurch gekennzeichnet, dass** die Durchgangslöcher (130) von benachbarten aktiven Beschichtungsschichten (120) in einer gestaffelten Form angeordnet sind.

12. Verfahren gemäß einem der Ansprüche 10 oder 11, **dadurch gekennzeichnet, dass** die negative Silicium-Elektrodenplatte (100) N aktive Beschichtungsschichten (120) umfasst, wobei 2≤N≤5; wobei das Verfahren Folgendes umfasst:
einen Schritt des Auftragens einer ersten aktiven Beschichtungsschicht (1201) der N aktiven Beschichtungsschichten (120) auf eine Oberfläche des Stromabnehmers (110) und dann das Bilden der ersten Durchgangslöcher (130) in der ersten aktiven Beschichtungsschicht (1201), die auf die Oberfläche des Stromabnehmers (110) aufgetragen wurde, wobei sich die ersten Durchgangslöcher (130) senkrecht durch die erste aktive Beschichtungsschicht (1201) hindurch erstrecken;
einen Schritt des Auftragens einer zweiten aktiven Beschichtungsschicht (1202) der N aktiven Beschichtungsschichten (120) auf die erste aktive Beschichtungsschicht (121), in der die ersten Durchgangslöcher (130) ausgebildet sind, und dann das Bilden der zweiten Durchgangslöcher (130) in der zweiten aktiven Beschichtungsschicht (1202), die auf die erste aktive Beschichtungsschicht (121), in der die ersten Durchgangslöcher (130) ausgebildet sind, aufgetragen wurde, wobei sich die zweiten Durchgangslöcher (130) senkrecht durch die zweite aktive Beschichtungsschicht (1202) hindurch erstrecken; und
das Wiederholen der obigen Schritte, bis man eine negative Silicium-Elektrodenplatte erhält, die N aktive Beschichtungsschichten (120) umfasst.

13. Verfahren gemäß einem der Ansprüche 10 bis 12, **dadurch gekennzeichnet, dass** die wenigstens zwei aktiven Beschichtungsschichten (120) aus aktiver Aufschlämmung bestehen, die ein leitendes Mittel, einen Klebstoff, ein Verdickungsmittel und die negativen aktiven Materialien enthält; und das Verfahren weiterhin umfasst:
einen Schritt (301) des Herstellens der aktiven Aufschlämmung, die die negativen aktiven Materialien enthält, welche die Siliciummaterialien umfassen; und
einen Schritt (302) des Auftragens und Verdichtens der aktiven Aufschlämmung auf einer Fläche des Stromabnehmers (110), wodurch die wenigstens zwei aktiven Beschichtungsschichten (120) gebildet werden.

14. Lithiumionenbatterie, umfassend eine negative Silicium-Elektrodenplatte (100), **dadurch gekennzeichnet, dass**
die negative Silicium-Elektrodenplatte (100) die negative Silicium-Elektrodenplatte (100) gemäß einem der Ansprüche 1 bis 9 ist.

## Revendications

1. Feuille d'électrode négative en silicium (100), comprenant :
un collecteur de courant (110) ; et
au moins deux couches de revêtement actif (120) contenant des matériaux actifs négatifs, revêtues séquentiellement sur le collecteur de courant (110), les matériaux actifs négatifs contenant des matériaux de silicium ;
étant **caractérisée en ce que** des trous traversants (130) sont formés dans chacune des couches de revêtement actif (120), les trous traversants (130) s'étendant verticalement à travers la couche de revêtement actif (120) respective et dans lequel les trous traversants (130) sont agencés à intervalles dans les couches de revêtement actif (120) ; et
parmi les au moins deux couches de revêtement actif (120), une teneur en silicium d'une couche de revêtement actif proximale par rapport au collecteur de courant (110) est supérieure à une teneur en silicium d'une couche de revêtement actif distale par rapport au collecteur de courant (110).

2. Feuille d'électrode négative en silicium (100) selon la revendication 1, étant **caractérisée en ce que** les trous traversants de couches de revêtement actif (120) adjacentes sont agencés en quinconce.

3. Feuille d'électrode négative en silicium (100) selon la revendication 1 ou 2, étant **caractérisée en ce qu'**une différence de la teneur en silicium entre deux couches de revêtement actif adjacentes est dans une plage de 5 % en poids à 35 % en poids.

4. Feuille d'électrode négative en silicium (100) selon l'une quelconque des revendications 1 à 3, étant **caractérisée en ce que** les matériaux actifs négatifs contiennent des matériaux de graphite.

5. Feuille d'électrode négative en silicium (100) selon l'une quelconque des revendications 1 à 4, étant **caractérisée en ce que** les au moins deux couches de revêtement actif (120) sont fabriquées à partir d'une suspension active contenant un agent conducteur, un agent de liaison, un épaississant et les matériaux actifs négatifs ; et
une teneur massique de l'agent de liaison contenu dans une couche de revêtement actif ayant une teneur en silicium élevée dans la suspension active est supérieure à une teneur massique de l'agent de liaison contenu dans une couche de revêtement actif ayant une teneur en silicium faible dans la suspension active.

6. Feuille d'électrode négative en silicium (100) selon la revendication 5, étant **caractérisée en ce qu'**une différence de la teneur massique de l'agent de liaison entre deux couches de revêtement actif adjacentes n'est pas supérieure à 3 % en poids.

7. Feuille d'électrode négative en silicium (100) selon l'une quelconque des revendications 1 à 6, étant **caractérisée en ce que** le nombre de couches des au moins deux couches de revêtement actif (120) est inférieur ou égal à 5.

8. Feuille d'électrode négative en silicium (100) selon la revendication 7, étant **caractérisée en ce que** le nombre de couches des au moins deux couches de revêtement actif (120) est égal à 5 ;
une teneur massique en silicium dans les matériaux actifs négatifs dans une première couche de revêtement actif (1201) est de 20 % à 50 % ;
une teneur massique en silicium dans les matériaux actifs négatifs dans une deuxième couche de revêtement actif (1202) est de 15 % à 40 % ;
une teneur massique en silicium dans les matériaux actifs négatifs dans une troisième couche de revêtement actif (1203) est de 10 % à 30 % ;
une teneur massique en silicium dans les matériaux actifs négatifs dans une quatrième couche de revêtement actif (1204) est de 5 % à 20 % ; et
une teneur massique en silicium dans les matériaux actifs négatifs dans une cinquième couche de revêtement actif (1205) est inférieure à 5 %, sur la base de la masse totale des matériaux actifs négatifs, respectivement.

9. Feuille d'électrode négative en silicium (100) selon la revendication 4, étant **caractérisée en ce qu'**une épaisseur de chacune des au moins deux couches de revêtement actif (120) est de 20 à 90 µm.

10. Procédé de fabrication d'une feuille d'électrode négative en silicium (100) selon l'une quelconque des revendications 1 à 9, comprenant :
le revêtement séquentiel d'au moins deux couches de revêtement actif (120) contenant des matériaux actifs négatifs sur un collecteur de courant (110), les matériaux actifs négatifs contenant des matériaux de silicium ; et
étant **caractérisé en ce que** le procédé comprend en outre :
la formation de trous traversants (130) dans chacune des couches de revêtement actif (120), les trous traversants (130) s'étendant verticalement à travers la couche de revêtement actif (120) respective et étant agencés à intervalles, ce qui permet d'obtenir la feuille d'électrode négative de silicium ;
dans lequel, parmi les au moins deux couches de revêtement actif (120), une teneur en silicium d'une couche de revêtement actif proximale par rapport au collecteur de courant (110) est supérieure à une teneur en silicium d'un matériau de revêtement actif distal par rapport au collecteur de courant (110).

11. Procédé selon la revendication 10, étant **caractérisé en ce que** les trous traversants (130) de couches de revêtement actif (120) adjacentes sont agencés en quinconce.

12. Procédé selon l'une quelconque des revendications 10 ou 11, étant **caractérisé en ce que** la feuille d'électrode négative en silicium (100) comprend N couches de revêtement actif (120), où 2 ≤ N ≤ 5 ; le procédé comprenant :
une étape de revêtement d'une première couche de revêtement actif (1201) des N couches de revêtement actif (120) sur une surface du collecteur de courant (110) puis la formation de premiers trous traversants (130) dans la première couche de revêtement actif (1201) revêtue sur la surface du collecteur de courant (110), les premiers trous traversants (130) s'étendant verticalement à travers la première couche de revêtement actif (1201) ;
une étape de revêtement d'une seconde couche de revêtement actif (1202) des N couches de revêtement actif (120) sur la première couche de revêtement actif (121) formée avec les premiers trous traversants (130) puis la formation de seconds trous traversants (130) dans la seconde couche de revêtement actif (1202) revêtue sur la première couche de revêtement actif (121) formée avec les premiers trous traversants (130), les seconds trous traversants (130) s'étendant verticalement à travers la seconde couche de revêtement actif (1202) ; et
la répétition des étapes ci-dessus jusqu'à ce que la feuille d'électrode négative en silicium comprenant N couches de revêtement actif (120) soit obtenue.

13. Procédé selon l'une quelconque des revendications 10 à 12, étant **caractérisé en ce que** les au moins deux couches de revêtement actif (120) sont fabriquées à partir d'une suspension active contenant un agent conducteur, un agent de liaison, un épaississant, et les matériaux actifs négatifs ; et dans lequel le procédé comprend en outre :
une étape (301) de préparation de la suspension active contenant les matériaux actifs négatifs incluant les matériaux de silicium ; et
une étape (302) de revêtement et de compactage de la suspension active sur une surface du collecteur de courant (110), ce qui permet de former les au moins deux couches de revêtement actif (120).

14. Batterie au lithium-ion, comprenant une feuille d'électrode négative de silicium (100), étant **caractérisée en ce que** la feuille d'électrode négative de silicium (100) est la feuille d'électrode négative de silicium (100) selon l'une quelconque des revendications 1 à 9.
